Europäisches Patentamt

European Patent Office

Office européen des brevets

(19)

(11) EP 0 751 372 A2

(12) # EUROPEAN PATENT APPLICATION

(43) Date of publication:
02.01.1997 Bulletin 1997/01

(51) Int Cl.⁶: **G01B 21/06**, B65H 43/08
// B65H23/02

(21) Application number: 96830360.2

(22) Date of filing: 24.06.1996

(84) Designated Contracting States:
**DE ES FR GB**

(30) Priority: 26.06.1995 IT MI951361

(71) Applicant: **ALBERTO, Pietro**
**I-13051 Biella (IT)**

(72) Inventor: **ALBERTO, Pietro**
**I-13051 Biella (IT)**

(74) Representative: **Adorno, Silvano et al**
**c/o SOCIETA' ITALIANA BREVETTI S.p.A.**
**Via Carducci, 8**
**20123 Milano (IT)**

(54) **Device for fabric edge position detection**

(57) Fabric-measuring device comprising a rail (1) on which run two carriages (2,2') driven by independent servomechanisms (7,7') and provided with sensors (12,12' and 13,13') detecting the position of the edge (14) of the fabric to be measured. This device, installed perpendicular to the feed direction of the fabric in a finishing plant, can quickly and precisely measure the width thereof.

Fig.1

EP 0 751 372 A2

## Description

The present invention relates to a fabric-measuring device, and in particular a device which can quickly and precisely measure the width of a fabric.

It is known that in the finish plants it is frequently necessary to check the quality and the dimensional stability of a fabric. Such a check can be carried out by continuously sample the width during the different working steps.

In order to avoid that this sample has to be carried out manually, with consequent stop of the work and risk of mistakes, it is already known an automatic measuring device comprising a row of optical sensors arranged perpendicular to the feed direction of the fabric. Such sensors detect any screening of a corresponding row of LED's arranged on the other side of the fabric. The width of the fabric can be calculated by multiplying the number of screened LED's by the distance between two LED's.

The working concept of this known device causes many measurement errors. As a matter of fact, the LED diameter cannot be reduced under a certain limit and, furthermore, it is necessary to leave a margin between two LED's to avoid that an optical sensor could accidentally detect more than a LED at a time.

Therefore, object of the present invention is to provide a fabric-measuring device free from such a disadvantage. Said object is obtained by means of a device comprising a rail on which run two carriages driven by independent servomechanisms and provided with sensors detecting the position of the edge of the fabric to be measured. As a matter of fact, by means of this device it is possible to measure the width of the fabrics in a continuous way and with a precision far higher with respect to the traditional systems.

Further advantages and features of the device according to the present invention will become clear to those skilled in the art from the following detailed description on an embodiment thereof with reference to the attached drawings, wherein:

fig. 1 shows a perspective view of the device according to the present invention; and
fig. 2 shows an enlarged lateral view of the device during the measurement of a fabric.

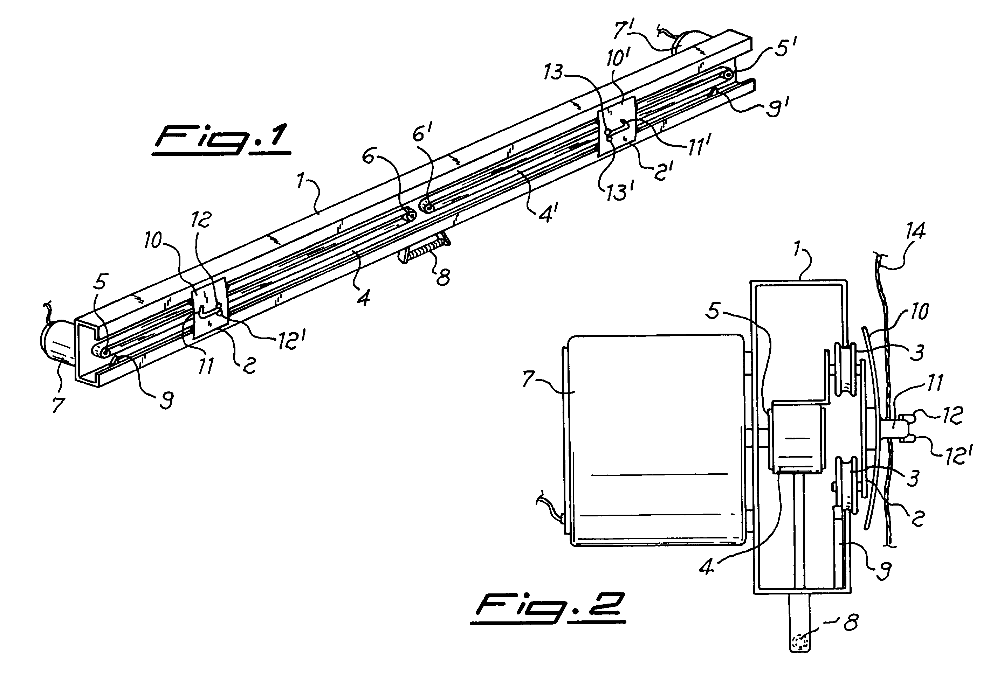

Referring to fig. 1, there can be seen that the device according to the present invention comprises a rail 1 consisting of a C-beam. On this rail 1 run two carriages 2,2', both provided with a plurality of rollers 3 which freely rotate onto the upper and the lower edge of rail 1.

A pair of belts 4,4' is arranged inside rail 1, stretched between two external pulleys 5,5' pivoted at the two ends of rail 1, and two internal pulleys 6,6' pivoted close to the middle of rail 1. External pulleys 5,5' are keyed on the shafts of two independent stepper motors 7,7', while inner pulleys 6,6' are idle and attracted to the middle of rail 1 by a spring tightener 8. Carriages 2 and 2' are fixed on belts 4 and 4' respectively. Furthermore, two reference microswitches 9,9' are fixed close to pulleys 5,5' and are activated by carriages 2,2' when they reach the end.

Plates 10,10', which are slightly concave toward rail 1, are mounted onto carriages 2,2'. On plates 10,10' are mounted two square brackets 11,11' whose ends are provided with pairs of superposed photocells 12,12' and 13,13'. Photocells 12 and 13 are slightly closer to the middle of rail 1 with respect to photocells 12' and 13'. Each of these photocell emits a signal if an opaque body, for instance the edge 14 of a fabric, comes between the photocell and the relevant plate, as can be clearly seen in fig. 2.

The signals transmitted by microswitches 9,9' and by the pairs of photocells 12,12' and 13,13' are received by a processing unit (not shown in the figure), which also controls the work of the two stepper motors 7,7'.

During the use, the device according to the present invention is arranged in the area of the plant wherein the fabric measurement is requested. The device should be installed so that the fabric to be measured could run thereon crossing the plan comprised between photocells 12,12',13,13' and plates 10,10'. As a matter of fact, the slightly concave shape of plates 10,10' acts as a guide for a perfect running of the fabric on the device. Before the measurement, carriages 2,2' are moved away from each other as far as they activate the relevant microswitch 9,9'. In order to measure the fabric, carriages 2,2' are moved by stepper motors 7,7' toward the middle of rail 1. As soon as the inner photocell of a carriage is obscured by an edge of the fabric, the relevant motor is stopped. When both carriages 2,2' are stopped, the processing unit calculates in real time the width of the fabric according to the following formula:

$$x = \delta - p * (n + n'),$$

wherein $\delta$ is the distance between the reference microswitches 9,9', p is the displacement of each carriage 2,2' at every step of motors 7,7', n is the number of steps made by carriage 2 and n' the number of steps made by carriage 2'.

After the measurement, the state of the pairs of photocells of each carriage is checked. If the inner photocell of a pair is obscured and the outer is not obscured, the relevant carriage stands still. Otherwise, if both photocells are obscured, the relevant carriage is moved toward the outside of rail 1. Similarly, if both photocells are not obscured, the relevant carriage is moved toward the inside of rail 1. After each displacement of carriages 2,2', the processing unit calculates the reciprocal distance again according to the above mentioned formula, so as to give a new measurement.

With the data sent by one or more of the devices according to the present invention, suitably arranged upstream and/or downstream a finish plant, is therefore possible to control the work of the plant itself, so as to increase the efficiency and lower the production costs. In order to reduce to the minimum the measuring error, the rotation angle of the shaft of motors 7,7' in a single step should be as small as possible.

Further modifications and/or additions may be made by those skilled in the art to the embodiment here described and illustrated, yet without departing from the scope of the invention. For instance, instead using the pairs of photocells 12,12' and 13,13', it is possible to use another kind of sensor, either optical or mechanical, suitable for the above described purpose.

Furthermore, it is clear that in another embodiment of the present invention it is possible to substitute stepper motors 7,7' and/or belts 4,4' with other servomechanisms and/or transmission means, as long as it is always possible to precisely control the displacement of carriages 2,2'.

## Claims

1. Fabric-measuring device, characterized in that it comprises a rail (1) on which run two carriages (2,2') driven by independent servomechanisms (7,7') and provided with sensors detecting the position of the edge (14) of the fabric to be measured.

2. Device according to claim 1, characterized in that such sensors comprise pairs of superposed photocells (12,12' and 13,13'), whereby one of the photocells of each pair is slightly closer to the middle of the rail (1) with respect to the other photocell of the same pair.

3. Device according to claim 1 or 2, characterized in that each servomechanism (7,7') is a stepper motor.

4. Device according to claim 3, characterized in that the carriages (2,2') are fixed onto belts (4,4') stretched between two external pulleys (5,5') pivoted at the two ends of the rail (1), and two internal pulleys (6,6') pivoted close to the middle of the rail (1).

5. Device according to claim 4. characterized in that each stepper motor (7,7') is keyed on one of the external (5,5') or internal (6,6') pulleys.

6. Device according to claim 4 or 5, characterized in that the belts (4,4') are stretched by a tigthener (8).

Fig.1

Fig.2

4